Europäisches Patentamt

(19) European Patent Office

Office européen des brevets

(11) Numéro de publication: **0 141 689**
**B1**

(12) **FASCICULE DE BREVET EUROPÉEN**

(45) Date de publication du fascicule du brevet:
13.01.88

(51) Int. Cl.⁴: **G 01 N 29/00**, G 21 C 17/00

(21) Numéro de dépôt: **84401693.1**

(22) Date de dépôt: **20.08.84**

(54) Procédé et installation de détection de corps errants dans un réacteur nucléaire.

(30) Priorité: **19.08.83 FR 8313500**

(43) Date de publication de la demande:
**15.05.85 Bulletin 85/20**

(45) Mention de la délivrance du brevet:
**13.01.88 Bulletin 88/2**

(84) Etats contractants désignés:
**BE CH DE GB IT LI NL SE**

(56) Documents cité:
**EP-A-0 049 659**
**FR-A-2 124 509**
**FR-A-2 215 624**
**FR-A-2 316 594**
**US-A-4 036 057**

**IEEE TRANSACTIONS ON NUCLEAR SCIENCE;**
**volume NS-29, no. 1, février 1982, (NEW YORK, US);**
**R.G. BYFORD et al.: "An advanced digital impact**
**monitor", pages 993-999**

(73) Titulaire: **ELECTRICITE DE FRANCE Service**
**National, 2, rue Louis Murat, F-75008 Paris (FR)**

(72) Inventeur: **Puyal, Claude, 5 rue de la Liberté,**
**F-78800 Houilles (FR)**

(74) Mandataire: **Fort, Jacques, CABINET**
**PLASSERAUD 84, rue d'Amsterdam, F-75009 Paris**
**(FR)**

## Description

Les corps errants dans un réacteur nucléaire peuvent, si leur présence se prolonge, provoquer des dommages importants par martelage des structures.

Une solution pour détecter ces corps errants consiste à effectuer, à intervalles réguliers, par exemple chaque jour, une écoute et une mesure des signaux fournis par des capteurs (généralement des accéléromètres) placés au contact de la paroi du circuit primaire du réacteur.

Cette solution présente diverses limitations. Sauf à augmenter la fréquence des écoutes, on risque de ne déceler la présence d'un corps errant qu'avec un retard tel que des dommages importants sont survenus. Et il est difficile d'attribuer les bruits anormaux à une origine déterminée parmi celles qui sont possibles et qui comprennent, notamment, l'existence de fuites de vapeur et des chocs dûs à des phénomènes perturbateurs non dangereux.

Une autre solution (EP-A-00 49659) utilise plusieurs capteurs portés chacun par un organe distinct du réacteur et associé à une voie de détection comportant un discriminateur. Toutes les voies sont reliées à des moyens d'encodage qui classent les impulsions provenant des différents capteurs dans l'ordre d'arrivée et comparent la séquence ainsi obtenue à une séquence déterminée. Cette solution ne permet pas d'identifier les chocs dûs à des corps errants en présence d'un bruit de fond important.

Le document FR-A-2 215 624 fait connaître de son côté un appareil de détection qui détermine la cadence des impacts détectés par un capteur et leur énergie et qui mesure l'extremum d'énergie pendant une durée determinée. Cette approche ne permet pas une discrimination suivant l'origine des chocs.

L'organisme demandeur à également proposé de déceler les vibrations anormales ou les transitoires dans une cuve de réacteur en mesurant le facteur de crête des vibrations appliquées à un accéléromètre en contact avec la paroi du circuit primaire du réacteur. Une alarme est déclenchée lorsque ce facteur dépasse une valeur déterminée. Ce dispositif ne permet pas de différencier les chocs suivant leur origine et, en particulier, il est aussi sensible aux chocs dus à l'oscillation d'organes en place qu'à la présence d'un corps errant.

L'invention vise à fournir un procédé et une installation répondant mieux que ceux antérieurement connus aux exigences de la pratique, notamment en ce qu'ils permettent de réaliser en continu une discrimination entre les sources de bruits normaux et les sources de bruits d'impacts dûs aux corps errants.

Pour cela, l'invention utilise le fait que les impacts décelés par des capteurs, généralement des accéléromètres, portés par des organes plongeant dans le réacteur, mais découplés de la paroi externe du circuit primaire, fournissent, en réponse à des impacts de corps errants contre la paroi du circuit primaire, des signaux corrélés, puisque excitant les divers capteurs à des instants qui ne diffèrent que des différences de temps de parcours de la perturbation.

Au contraire, les chocs dûs aux oscillations ou aux vibrations de la structure portant un détecteur ne donnent pas lieu à des signaux corrélés sur tous les détecteurs.

L'invention utilise ce fait en combinaison avec un autre: en l'absence de choc, le bruit de fond vibratoire a une nature aléatoire et le rapport entre la valeur crête et la valeur efficace, qu'on appelle "facteur de crête", ne dépasse pas 4 à 5, de par les propriétés statistiques du signal. On pourra en conséquence différencier les impacts du bruit du fond continu, même intense, par le fait qu'ils présentent un facteur de crête supérieur à un seuil. Le bruit de fond étant voisin de quatre fois la valeur efficace, on pourra choisir un seuil de facteur de crête égal à 12, pour obtenir une bonne discrimination des impacts.

L'invention propose en conséquence un procédé de détection de corps errants dans un réacteur nucléaire, tel que défini et décrit par la revendication 1.

Le seuil sur le taux de coïncidence sera choisi pour éviter les alarmes intempestives dues aux coïncidences fortuites. De même, on choisira un niveau de facteur de crête (rapport entre la valeur de crête du signal et la valeur efficace) permettant de dégager les signaux impulsionnels dûs aux chocs du bruit de fond qui est variable selon l'état de fonctionnement du réacteur et qui peut être élevé en cas de fuite de vapeur sur le circuit primaire ou secondaire.

En général, du moins dans le cas d'un réacteur utilisant l'eau comme modérateur et comme réfrigérant, on utilisera des coïncidences entre détecteurs portés par des tubes-guides traversant la paroi de la cuve du réacteur. On peut ainsi différencier les chocs dûs à un corps errant des chocs provoqués par impact d'un doigt de gant d'instrumentation interne du réacteur contre le pied de l'assemblage combustible correspondant. Un tel impact se transmet jusqu'au bas de la cuve par l'intermédiaire du tube-guide, mais n'est pas ressenti par les capteurs portés par d'autres tubes-guides. En résumé, l'invention associe la détermination du facteur de crête, un paramètre qui se justifie physiquement, à partir de la mesure instantanée et de la détermination de la valeur efficace déterminée à partir de la mesure antérieure, et la corrélation entre plusieurs voies. La constante de temps du circuit de mesure de la valeur efficace (circuit de détection RMS) sera choisie de façon que la présence, sur le signal, d'impulsions espacées ne modifie pratiquement pas cette valeur.

Le procédé peut également comporter, de façon avantageuse, la comparaison de la valeur efficace du signal à un second seuil. Le procédé permet ainsi de détecter même des chocs très rapprochés (provoqués par exemple par la présence de plusieurs corps errants). Dans ce cas en effet, la valeur efficace augmente et le facteur de crête diminue. Mais l'augmentation de la valeur efficace conduit celle-ci à dépasser un seuil de détection, qui sera par exemple égal à trois fois la valeur efficace normale, en l'absence de corps errants, et provoque une alarme.

L'invention propose également une installation de détection de corps errants dans la cuve d'un réacteur nucléaire, permettant de mettre en oeuvre le procédé ci-dessus défini, comprenant plusieurs capteurs d'impulsions mécaniques, tels que des accéléromètres, portés par des structures distinctes de la cuve et un détecteur de crêtes, installation caractérisé en ce qu'elle comporte des moyens de détection des coïncidences entre signaux impulsionnels fournis par les différents capteurs et ayant un facteur de crête supérieur à un niveau prédéterminé et des moyens pour provoquer une alarme en réponse au dépassement d'un seuil prédéterminé par le taux de coïncidence.

L'invention sera mieux comprise à la lecture de la description qui suit d'un mode particulier de réalisation de celle-ci, donné à titre d'exemple non limitatif. La description se réfère aux dessins qui l'accompagnent, dans lesquels:

- la figure 1 est un schéma de principe montrant une installation simple de détection de corps errants, utilisable dans un réacteur nucléaire du type à eau sous pression,

- la figure 2 montre un mode possible de génération de signaux ayant un factaur de crête réglable, permettant l'étalonnage d'une installation du genre montré en figure 1.

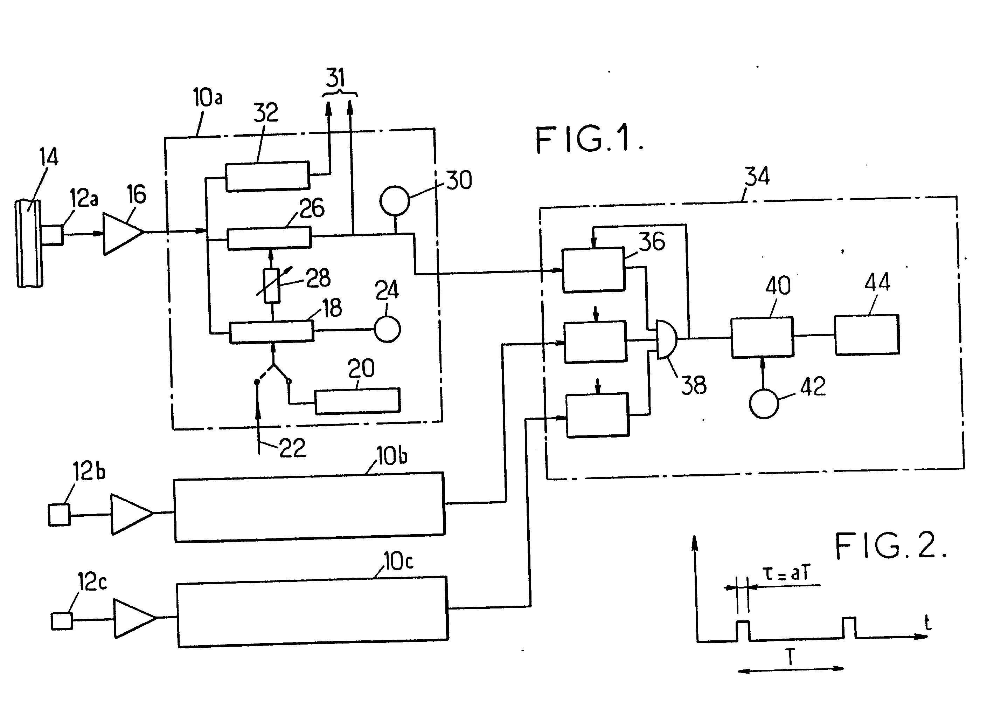

L'installation dont le schéma de principe est montré en figure 1, permet à la fois de détecter la présence de corps errants et celle de bruits normaux ou anormaux d'autre nature. Elle comprend plusieurs voies identiques, dont trois sont représentées et désignées par les références 10a, 10b et 10c, et une partie commune. L'organe d'entrée de chaque voie est constitué par un capteur de chocs, qu'on supposera être un accéléromètre 12a, 12b ou 12c. Chacun des ces accéléromètres est fixé sur un tube-guide 14 différent. Sur chaque voie 10a, 10b ou 10c, le signal de sortie de l'accéléromètre est appliqué à un emplificateur de charge 16, qui attaque, dans le mode de réalisation illustré, deux circuits séparés. L'un des circuits 18 est prévu pour élaborer la valeur efficace du signal et la comparer avec un seuil fourni soit par une source interne munie d'un potentiomètre de réglage 20, soit par une source externe 22. Lorsque la valeur efficace du signal dépasse le seuil déterminé, par exemple par suite de la détection d'impulsions avec un taux de répétition élevé (ce cas étant par exemple celui de plusieurs corps errants) ou d'un bruit de fond élevé (cas d'une fuite de vapeur) le circuit 18 actionne une alarme 24. Le circuit 18 fournit par ailleurs une tension représentative de la valeur efficace au second circuit 26, destiné à détecter la présence d'impulsions isolées. Ce circuit 26 comporte un détecteur de crête et des moyens pour comparer la valeur de crête à la valeur efficace qu'il reçoit du circuit 18 par l'intermédiaire d'un potentiomètre d'ajustage 28. Ce potentiomètre fixe donc un seuil de facteur de crête au delà duquel il y a émission d'une impulsion de sortie par le circuit 26. En règle générale, on choisira un facteur de crête compris entre 10 et 15 dans le cas d'accéléromètres placés sur les tubes-guides. Un voyant d'alarme 30 muni d'un système de maintien pendant une durée suffisante pour permettre l'observation peut être placé sur la sortie de chaque circuit 26. Une sortie supplémentaire peut être prévu vers un enregistreur 31.

L'installation représentée comporte encore un troisième circuit 32 de détection d'enveloppe permettant, en cas d'alarme, d'enregistrer également un signal représentatif de l'enveloppe du signal.

Les sorties de toutes les voies 10a, 10b et 10c attaquent un module commun 34 destiné à la détection des corps errants. Dans le mode de réalisation illustré, ce module est prévu pour déterminer les coïncidences entre signaux provenant des trois voies. Mais il serait possible de concevoir un module 34 détectant toutes les coïncidences entre deux voies sur trois, ou entre $m$ voies sur $n$ ($n$ étant le nombre total de voies et $m$ étant un nombre entier inférieur ou égal à $n$). Dans le cas représenté, le signal de sortie de chaque voie attaque un circuit de temporisation 36, constitué par exemple par un monostable, dont la sortie est reliée à l'une des entrées d'une porte ET 38. La sortie de cette porte est reliée à une entrée de remise à zéro forcées des monostables et la durée de maintien de chaque monostable est choisie à une valeur sensiblement égale à la différence maximale entre les temps de propagation d'une onde sonore d'un point d'impact à tous les capteurs. La sortie de la porte ET 38 attaque un compteur de taux de coïncidence 40 associé à un circuit à seuil, éventuellement réglable à l'aide d'un potentiomètre 42. Lorsque le taux de coïncidence dépasse le seuil, choisi pour être supérieur au taux maximal de coïncidences fortuites, le circuit 40 actionne une alarme 44.

L'installation peut de plus comporter des voies reliées à des capteurs placés sur la paroi du circuit primaire, permettant de compléter la surveillance (des capteurs en fond de cuve ou en fond de boîte à eau des générateurs de vapeur étant peu sensibles aux bruits de barre de commande).

La mise en oeuvre du procédé suivant l'invention pourra dépendre de l'état de fonctionnement du réacteur.

En phase d'exploitation normale, alors que le réacteur est stable, à une puissance qui peut être nulle mais en pression et à chaud, les chocs espacés (de 50 ms au moins) provoqués par un corps errant unique contre la cuve, excitent tous les accéléromètres 12a, 12b, 12c. Si ces chocs ont un facteur de crête sur chaque voie dépassant le seuil prédéterminé, les voies émettent des signaux impulsionnels avec un écart temporel inférieur à la durée de maintien des monostables 36. Le seuil pourra être choisi en fonction des caractéristiques particulières de chaque réacteur. Toutefois, on a constaté que le facteur de crête du bruit de fond est généralement d'environ 4, ce qui conduit à adopter un seuil d'environ 12 pour avoir une sensibilité correspondant à trois fois la valeur crête du signal normal. Dans la pratique, il suffira en général de prévoir une possibilité de réglage du seuil entre cinq fois et vingt fois la valeur efficace.

L'intérêt de la présence des circuits 18 est, notamment, de donner une alarme en présence de multiples corps errants. Le bruit de choc devient alors quasi continu et la valeur efficace augmente jusqu'à atteindre un seuil de déclenchement de 24, alors que le module 34 ne reçoit plus de signaux.

Par contre, lors d'un arrêt à froid, alors que la pression est habituellement inférieure à 100 bars, le niveau de bruit de fond augmente considérablement (de 5 à 10 fois en général). Le facteur de crête dû aux chocs diminue et les corps errants risquent de n'être plus détectés. Mais les circuits 18 sont par contre excités. Pour éviter des déclenchements intempestifs des alarmes 24, la référence extérieure 22 peut être prévue afin d'être commutée sur une valeur élevée en réponse à une baisse de pression du circuit primaire. D'autres solutions sont évidemment possibles pour éviter des alarmes injustifiées.

Les seuils de déclenchement de chacune des voies 10a, 10b, 10c peuvent être contrôlés par simulation en injectant à l'entrée des signaux périodiques de facteur de crête F connu.

Lorsqu'on veut disposer d'une large plage de réglage de seuil, s'étendant à des valeurs de F allant jusqu'à 20, il est avantageux d'utiliser des signaux rectangulaires périodiques de période T et de rapport cyclique a = $\tau/T$ ajustable (Figure 2). Si A est l'amplitude du signal, on a:

$$F = A/\sqrt{A^2 \cdot a} = 1/\sqrt{a}$$

On obtient ainsi aisément des taux très variables, comme le montre le tableau ci-après, correspondant à une fréquence de 100 Hz:

| a | 1/2 | 1/100 | 1/400 |
|---|-----|-------|-------|
| F | 1,44 | 10 | 20 |
| aT | 5 ms | 0,1 ms | 25 µs |

Des générateurs d'impulsion rectangulaire de période et de largeur d'impulsion réglables dans cette plage sont disponibles dans le commerce ou peuvent être réalisés dans cette intention.

**Revendications**

1. Procédé de détection de corps errants dans un réacteur nucléaire, utilisant les signaux fournis par des capteurs (12a, 12b, 12c) de chocs mécaniques, tels que des accéléromètres, portés par des organes du réacteur et associés à un détecteur de crêtes, suivant lequel on détermine la valeur efficace du signal fourni par chaque capteur et on élabore une impulsion de sortie chaque fois que la valeur de crête du signal présente un facteur de crête supérieur à un niveau prédéterminé, caractérisé en ce qu'on détecte sur au moins deux voies (10a, 10b, 10c) reliées chacune à un capteur différent (12a, 12b, 12c) porté par des organes du réacteur découplés de la paroi externe du circuit primaire et chacune associée à un détecteur de crête, les impulsions de sortie pour les signaux ayant un facteur de crête supérieur au niveau prédéterminé et on détermine le taux de coïncidence entre lesdites impulsions sur les deux voies (10a, 10b, 10c) pour provoquer une alarme lorsque ce taux dépasse un seuil.

2. Procédé selon la revendication 1, caractérisé en ce qu'on ajuste le seuil de taux de coïncidence pour éviter les alarmes intempestives dues aux coïncidences fortuites.

3. Procédé selon la revendication 1 ou 2, caractérisé en ce qu'on ajuste le niveau prédéterminé de facteur de crête pour dégager les signaux impulsionnels dûs aux chocs du bruit de fond fluctuant.

4. Procédé selon la revendication 3, caractérisé en ce qu'on détermine la valeur efficace avec une constante de temps telle que la présence d'impulsions espacées ne modifie pas sensiblement la valeur efficace.

5. Procédé selon l'une quelconque des revendications précédentes, caractérisé en ce que l'on compare la valeur efficace du signal à une valeur de seuil et en ce que l'on déclenche une alarme lorsque cette valeur efficace dépasse le seuil, qui peut avoir une valeur égale à environ trois fois la valeur efficace de l'absence de choc.

6. Procédé selon l'une quelconque des revendications précédentes, caractérisé en ce que l'on effectue la détection sur un nombre n de voies et en ce que l'on provoque une alarme lorsque le taux de coïncidence dépasse le seuil simultanément sur m voies, m étant un nombre entier au moins égal à 2 et inférieur à n.

7. Procédé selon l'une quelconque des revendications 1 à 6 de détection de corps errants dans un réacteur utilisant l'eau comme modérateur et comme réfrigérant, caractérisé en ce qu'on utilise les coïncidences entre détecteurs (12a, 12b, 12c) portés par des tubes-guides (14) traversant la paroi de la cuve du réacteur.

8. Procédé selon l'une quelconque des revendications 1 à 7, caractérisé en ce qu'on détermine le taux de coïncidence sur les impulsions après allongement de ces dernières par des monostables respectifs ayant un temps de maintien sensiblement égal à la différence maximale entre les temps de propagation d'une onde sonore d'un point d'impact à tous les capteurs.

9. Installation de détection de corps errants dans la cuve d'un réacteur nucléaire et mettant en oeuvre le procédé selon la revendication 1, comprenant plusieurs capteurs d'impulsions mécaniques (12a, 12b, 12c), tels que des accéléromètres, portés par des structures (14) distinctes de la cuve et un détecteur de crêtes, caractérisée en ce qu'elle comporte des moyens de détection (10a, 20b, 10c, 36, 38, 40) des coïncidences entre les signaux impulsionnels fournis par les différents capteurs et ayant un facteur de crête supérieur à un niveau prédéterminé et des moyens (42, 44) pour provoquer une alarme en réponse au dépassement d'un seuil prédéterminé par le taux de coïncidence.

# 0 141 689

**Patentansprüche**

1. Verfahren zum Ermitteln von abgeirrten Körpern in einem Kernreaktor unter Verwendung der Signale von Gebern (12a, 12b, 12c) für mechanische Stöße, z. B. Beschleunigungsgebern, die von Organen des Reaktors getragen werden und mit einem Geber für Spitzenwerte verbunden sind, durch den man den Effektivwert des von jedem Geber gelieferten Signals bestimmt und jedesmal einen Ausgangsimpuls bildet, wenn der Spitzenwert des Signals einen Spitzenfaktor aufweist, der größer als ein gegebenes Niveau ist,
dadurch gekennzeichnet,
daß man auf wenigstens zwei Wegen (10a, 10b, 10c), die jeweils mit einem unterschiedlichen Geber (12a, 12b, 12c) verbunden sind, der von Organen des Reaktors getragen wird, die von der Außenwand des Primärkreises losgelöst und jeweils mit einem Spitzengeber verbunden sind, die Ausgangsimpulse für die Signale ermittelt, deren Spitzenfaktor größer als das gegebene Niveau ist, und daß man den Koinzidenzgrad zwischen diesen Impulsen auf den beiden Wegen (10a, 10b, 10c) ermittelt, um einen Alarm zu erzeugen, wenn dieser Grad einen Schwellwert übersteigt.

2. Verfahren nach Anspruch 1,
dadurch gekennzeichnet,
daß man den Koinzidenzgrad-Schwellwert einstellt, um durch zufällige Koinzidenzen bedingte ungewollte Alarme zu vermeiden.

3. Verfahren nach Anspruch 1 oder 2,
dadurch gekennzeichnet,
daß man das gegebene Spitzenfaktor-Niveau einstellt, um durch Stöße des schwankenden Grundlärms bedingte Impulssignale auszuscheiden.

4. Verfahren nach Anspruch 3,
daß man den Effektivwert mit einer Zeitkonstante derart bestimmt, daß das Vorliegen von beabstandeten Impulsen den Effektivwert nicht merklich ändert.

5. Verfahren nach einem der vorhergehenden Ansprüche,
dadurch gekennzeichnet,
daß man den Effektivwert des Signals mit einem Schwellwert vergleicht, und daß man einen Alarm auslöst, wenn dieser Effektivwert den Schwellwert übersteigt, der einen Wert aufweisen kann, der ungefähr gleich dem dreifachen Effektivwert der Abwesenheit von Stößen ist.

6. Verfahren nach einem der vorhergehenden Ansprüche,
dadurch gekennzeichnet,
daß man die Bestimmung auf n Wegen durchführt, und daß man einen Alarm auslöst, wenn der Koinzidenzgrad den Schwellwert gleichzeitig an m Wegen übersteigt, wobei m eine ganze Zahl, wenigstens gleich 2 und kleiner als n ist.

7. Verfahren nach einem der Ansprüche 1 bis 6 zur Ermittlung von abirrenden Körpern in einem Reaktor, der Wasser als Moderator und Kühlmittel verwendet,
dadurch gekennzeichnet,
daß man die Koinzidenzen zwischen den Gebern (12a, 12b, 12c) verwendet, die von Rohrführungen (14) getragen werden, die die Wand des Reaktorbehälters durchqueren.

8. Verfahren nach einem der Ansprüche 1 bis 7,
dadurch gekennzeichnet,
daß man den Koinzidenzgrad an den Impulsen nach deren Verlängerung durch jeweilige monostabile Mulitvibratoren bestimmt, die eine Haltezeit haben, die im wesentlichen gleich der maximalen Differenz zwischen der Ausbreitung einer Schallwelle von einem Aufprallpunkt bis zu allen Gebern ist.

9. Anlage zum Ermitteln von abirrenden Körpern im Behälter eines Kernreaktors und zum Durchführen des Verfahrens nach Anspruch 1, mit mehreren Gebern für mechanische Impulse, z. B. Beschleunigungsgebern, die von gesonderten Strukturen des Behälters getragen werden, und mit einem Geber für Spitzenwerte,
dadurch gekennzeichnet,
daß sie folgendes aufweist: Mittel (10a, 20b, 10c, 36, 38, 40) zum Erfassen von Koinzidenzen zwischen den Impulssignalen, die von den verschiedenen Gebern geliefert werden und einen Spitzenfaktor haben, der größer als ein gegebenes Niveau ist, und Mittel (42,44) zum Erzeugen eines Alarms in Abhängigkeit vom Überschreiten eines gegebenen Schwellwerts durch den Koinzidenzgrad.

**Claims**

1. A process for detecting stray bodies in a nuclear reactor, using signals provided by sensors (12a, 12b, 12c) detecting mechanical impacts, such as accelerometers, supported by parts of the reactor and combined with a peak detector, wherein the rms value of the signal from each sensor is determined and an output pulse is delivered each time the peak value of the signal has a peak factor higher than a predetermined level, characterized in that the output pulses for the signals having a peak factor higher than a predetermined level are detected on at least two channels (10a, 10b, 10c) each connected to a different sensor (12a, 12b, 12c) supported by parts of the reactor uncoupled from the external wall of the primary circuit and each combined

with a peak detector, and the rate of coincidence of said pulses on the two channels (10a, 10b, 10c) is determined for triggering an alarm when this rate exceeds a threshold.

2. A process according to claim 1, characterized in that the threshold of the rate of coincidence is adjusted for avoiding untimely alarms due to accidental coincidences.

3. A process according to claim 1 or 2, characterized in that the predetermined level of the peak factor is adjusted for separating out pulse signals due to impacts from variable background noise.

4. A process according to claim 3, characterized in that the rms value is determined with such a time constant that the presence of time separated pulses does not substantially modify the rms value.

5. A process according to anyone of the preceding claims, characterized in that the rms value of the signal is compared with a threshold value and in that an alarm is triggered when this rms value exceeds the threshold, which may take a value equal to approximately three times the rms value in the absence of impacts.

6. A process according to any one of the preceding claims, characterized in that the detection is provided on a number $n$ of channels and in that an alarm is triggered when the rate of coincidence exceeds the threshold on $m$ channels simultaneously, $m$ being an integer at least equal to two and smaller than $n$.

7. A process according to any one of claims 1 to 6 for detecting stray bodies in a reactor using water as a moderator and a coolant, characterized in that the coincidences between sensors (12a, 12b, 12c) supported by guide tubes (14) passing through the wall of the reactor vessel are used.

8. Process according to any one of claims 1 to 7, characterized in that the rate of coincidence on the pulses is determined after lengthening of the duration of the latter using respective monostables having a holding time substantially equal to the maximum difference between the propagation times of a sound wave from an impact point to all the sensors.

9. An installation for detecting stray bodies in the vessel of a nuclear reactor and implementing the process according to claim 1, comprising a plurality of mechanical impact sensors (12a, 12b, 12c), such as accelerometers, supported by structures (14) separate from the vessel and a peak detector, characterized in that it comprises detection means (10a, 20b, 10c, 36, 38, 40) for detecting coincidences between the pulse signals provided by the different sensors and having a peak factor higher than a predetermined level and means (42, 44) for triggering an alarm when the rate of coincidences exceeds a predetermined threshold.

FIG.1.

FIG.2.

$\tau = aT$